# EUROPEAN PATENT SPECIFICATION

(11) **EP 2 048 401 B1**
(45) Date of publication and mention of the grant of the patent: **08.12.2010**
(21) Application number: 09000772.5
(22) Date of filing: 13.12.2006
(51) Int. Cl.: F16D 48/06, F16H 61/04, F16H 61/682, B60W 30/18, B60W 10/02

(54) **Gear change process for an automated manual transmission unit and automated transmission for a vehicle**
Gangwechselverfahren für eine automatisierte Schaltgetriebeeinheit und automatisiertes Getriebe für ein Fahrzeug
Procédé de changement de vitesses dans une unité de transmission manuelle automatique et transmission automatique pour véhicule

(30) Priority: 18.04.2006 JP 2006114701; 24.02.2006 JP 2006048086
(43) Date of publication of application: 15.04.2009
(62) Divisional of application: 06025877.9
(73) Proprietor: Yamaha Hatsudoki Kabushiki Kaisha, Iwata-shi, Shizuoka 438-8501 (JP)
(72) Inventor: Minami, Kengo, Iwata-shi Shizuoka-ken 438-8501 (JP); Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 555 461
- EP-A2- 0 328 362
- EP-A2- 0 635 391
- WO-A-2004/094177
- DE-A1- 10 306 934
- GB-A- 2 170 571
- US-A1- 2004 118 652
- US-B1- 6 481 554

## Description

The present invention relates to a gear change process for an automate manual transmission unit according to the preamble of independent claim 1 and an automated transmission for a vehicle according to the preamble of independent claim 5.

Such a gear change process for an automated manual transmission unit of a vehicle as well as such an automated transmission for a vehicle can be taken from the closest prior art document DE 103 06 934 A1. In particular, said document refers to a gear change process for determining the actual engagement condition of the friction clutch by means of a specific process carried out with the vehicle in stop condition by engaging the reverse gear of the transmission. In particular, said reverse gear is brought into a dog-contact condition so that the respective gears can rotate relative to each other, wherein the respective clutch position associated to said condition is detected. Said dog-contact condition is determined by means of a suitable sensor and the clutch is moved stepwise at predetermined distances so that a specific engagement point can be determined, which is close to a respective real engagement point.

A known vehicle includes an automated transmission controller (automated manual transmission device) which effects engagement and disengagement of its friction clutch and gear change of its dog-clutch-type transmission using electrically powered actuators. According to a proposed vehicle which has this type of automated transmission controller, the torque of the shift actuator is temporarily reduced and then increased when the respective gears cannot engage with each other, i.e., so-called dog-contact condition occurs at the time of shift change, so that the gears can come to engagement with each other (for example, see Patent Reference 1).
Patent Reference 1: JP-A-11-082710

In the automated transmission controller according to Patent Reference 1, however, a great volume of current load is applied to a shift actuator. It is therefore necessary to increase the size of the shift actuator. Moreover, since accurate control over the driving force of the shift actuator is required, the process volume of the control unit for the shift actuator increases. As a result, the size and cost of the control unit rise. Furthermore, since both an upstream main shaft and a downstream drive shaft of the dog-clutch transmission are stopped during stop of the vehicle, the dog-contact condition cannot be cancelled by the control over the torque of the shift actuator as in the method shown in Patent Reference 1.

It is an object of the present invention to provide a gear change process for an automated manual transmission unit of a vehicle as well as an automated transmission for a vehicle as indicated above which can be operated in a secure and reliable manner.

According to the method aspect of the present invention, said objective is solved by a gear change process for an automated manual transmission unit of a vehicle having the features of independent claim 1. Preferred embodiments are laid down in the dependent claims.

Moreover, according to the apparatus aspect of the present invention, said objective is also solved by an automated transmission for a vehicle having the features of independent claim 5. Preferred embodiments are laid down in the dependent claims.

In the following, the present invention is explained in greater detail with respect to several embodiments thereof in conjunction with the accompanying drawings, wherein:
- Fig. 1: is a side view of a motorcycle in a first embodiment,
- Fig. 2: illustrates a structure of a drive system of the motorcycle shown in Fig. 1,
- Fig.3: is a perspective view of a transmission gear constituting a dog-clutch-type transmission,
- Fig. 4: is a block diagram showing the entire structure of a control system provided on the motorcycle,
- Fig. 5: is a block diagram showing a drive system group,
- Fig. 6: is a block diagram showing a sensor and switch group,
- Fig. 7: is a flowchart showing a shift change control process during stop of the vehicle,
- Figs. 8(a) and 8(b): show clutch position with elapse of time when the shift change control process is conducted during stop of the vehicle,
- Fig. 9: is a flowchart showing a shift change control process during stop of a motorcycle in a second embodiment,
- Fig. 10: is a flowchart showing a shift change control process during stop of a motorcycle in a third embodiment,
- Figs. 11 (a) and 11 (b): show clutch position with elapse of time when a shift change control process is conducted during stop of a motorcycle in a fourth embodiment, and
- Figs. 12(a) and 12(b): show clutch position with elapse of time when a shift change control is conducted during stop of a motorcycle in a modified example.

### Description of Reference Numerals and Signs:

- 10: motorcycle
- 11: vehicle body frame
- 28: engine unit
- 43: shift switch
- 43a: shift-up switch
- 43b: shift-down switch
- 54: clutch (friction clutch)
- 54c: friction plate
- 54d: clutch plate
- 55: main shaft
- 56: main shaft revolution sensor
- 57, 59: transmission gear
- 57a: first gear
- 57b: second gear
- 57c: engaging projection
- 57e: engaging concave
- 63: clutch actuator (actuator)
- 65: shift actuator (actuator)
- 69: vehicle speed sensor (drive shaft revolution sensor)
- 70: gear position sensor
- 80: transmission (dog-clutch-type transmission)
- 100: ECU (control unit)
FIG. 4
- 90: main microcomputer
- 91 a: clutch actuator control program
- 91 b: shift actuator control program
- 93: drive circuit
- 96: main switch
- 97: battery
- 98: power source circuit
- 110: drive system group
- 120: sensor and switch group
FIG. 5
- 110: drive system group
- 49: throttle drive actuator
- 45: indicator
- 63: clutch actuator
- 65: shift actuator
FIG. 6
- 120: sensor and switch group
- 42: throttle input sensor
- 43: shift switch
- 50: throttle opening sensor
- 53: engine revolution sensor
- 56: main shaft revolution sensor
- 68: clutch position sensor
- 69: vehicle speed sensor
- 70: gear position sensor
FIG. 7
shift change control process during stop of vehicle
- s100: start clutch connection
- s110: clutch position reached reference clutch position?
- s120: start clutch low-speed connection
- s130: gear change completed?
- s140: disconnect clutch
end
FIG. 8
clutch position
second clutch position
dog-contact cancellation position (before use)
dog-contact cancellation position (abrasion)
first clutch position
clutch connection step
reference clutch position
clutch disconnection step
clutch low-speed connection step
time
gear position
dog-contact condition
gear change completion
time
FIG. 9
shift change control process during stop of vehicle
- s100: start clutch connection
- s110: clutch position reached reference clutch position?
- s120: start clutch low-speed connection
- s230: main shaft revolution is predetermined value?
- s140: disconnect clutch
end
FIG. 10
shift change control process during stop of vehicle
- s100: start clutch connection
- s110: clutch position reached reference clutch position?
- s120: start clutch low-speed connection
- s330: difference between main shaft revolution and drive shaft revolution is predetermined value?
- s140: disconnect clutch
end
FIG. 11
clutch position
second clutch position
dog-contact cancellation position (before use)
dog-contact cancellation position (abrasion)
first clutch position
clutch connection step
reference clutch position
clutch disconnection step
time
gear position
dog-contact condition
gear change completion
time
FIG. 12
clutch position
second clutch position
dog-contact cancellation position (before use)
dog-contact cancellation position (abrasion)
first clutch position
clutch connection step
reference clutch position
clutch disconnection step
clutch low-speed connection step
time
gear position
dog-contact condition
gear change completion
time

Several embodiments will be hereinafter described in detail with reference to the drawings.

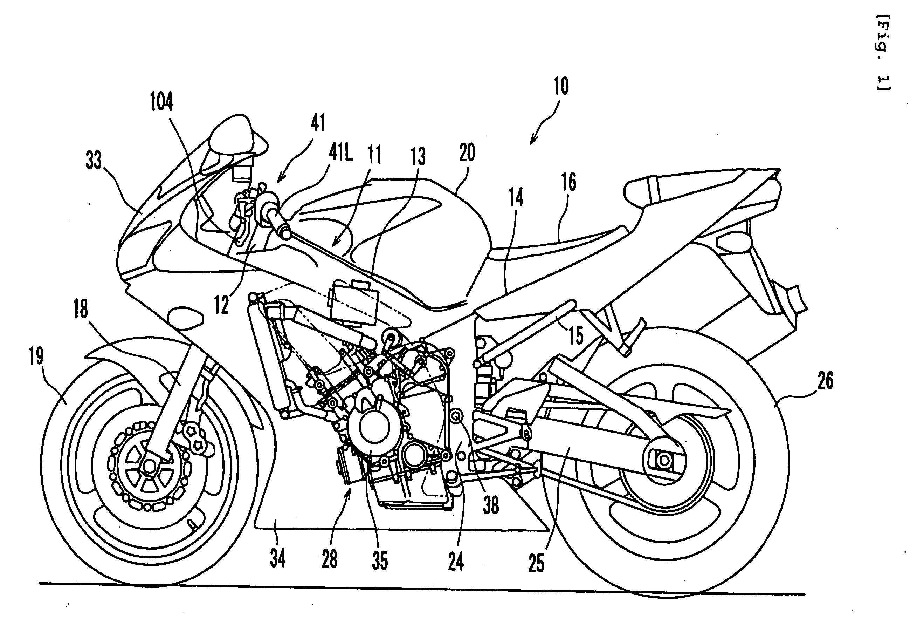

As illustrated in Fig. 1, a saddle-type vehicle in this embodiment is a motorcycle 10. The motorcycle 10 includes a vehicle body frame 11 constituting the framework, and a seat 16 on which a rider sits. The rider sitting on the seat 16 rides astride the vehicle body frame 11. According to the embodiments, the shape of the vehicle is not limited to that shown in Fig. 1, nor are the maximum speed, displacement volume, size, and other conditions of the vehicle limited thereto. Additionally, the saddle-type vehicle according to the embodiments is not limited to a so-called motorcycle-type two-wheel vehicle which includes a fuel tank before the seat, but is applicable to other types of two-wheel vehicle. Moreover, the embodiments are not limited to a two-wheel vehicle, but may be other types of saddle-type vehicle. Furthermore, the embodiments are not limited to a saddle-type vehicle, but may be other types of vehicle such as four-wheel buggy for two riders.

In the following description, the front-and-rear direction and the left-and-right direction are defined as viewed by the rider sitting on the seat 16. The vehicle body frame 11 has a steering head pipe 12, a main frame 13 extending diagonally downward to the rear from the steering head pipe 12, left and right seat rails 14 extending diagonally upward to the rear from the intermediate position of the main frame 13, and left and right seat pillar tubes 15 connected with the rear end of the main frame 13 and the intermediate positions of the seat rails 14.

A front wheel 19 is supported by the steering head pipe 12 via a front fork 18. A fuel tank 20 and the seat 16 are supported on the seat rails 14. The seat 16 extends from above the fuel tank 20 toward the rear ends of the seat rails 14. The fuel tank 20 is disposed above the front half parts of the seat rails 14.

A pair of left and right rear arm brackets 24 are provided at the rear end of the main frame 13. In this embodiment, the rear arm brackets 24 and other components provided on the main frame 13 constitute a part of the vehicle body frame 11.

The rear arm brackets 24 project downward from the rear end of the main frame 13. Pivot shafts 38 are equipped on the rear arm brackets 24, and the front ends of rear arms 25 are supported by the pivot shafts 38 such that the rear rams 25 can freely swing. A rear wheel 26 is supported by the rear ends of the rear arms 25.

An engine unit 28 for driving the rear wheel 26 is supported by the vehicle body frame 11. A crank case 35 is supported by the main frame 13 in such a manner as to be suspended therefrom. In this embodiment, a gasoline engine (not shown) is provided in the engine unit 28. However, the engine included in the engine unit 28 is not limited to an internal combustion engine such as a gasoline engine, but may be a motor engine or the like. Alternatively, the engine may be a combination of a gasoline engine and a motor engine. The motorcycle 10 includes a front cowl 33 and left and right leg shields 34. The leg shields 34 are cover components covering the front parts of the rider's legs.

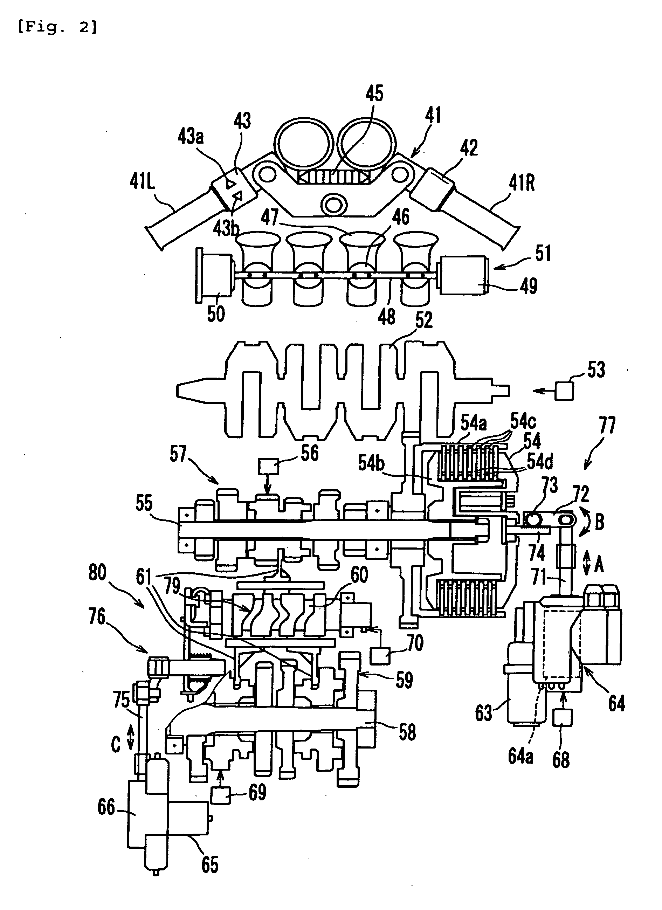

Though not shown in Fig. 1, a brake pedal is equipped in the lower right area of the motorcycle 10. The brake pedal is a component for braking the rear wheel 26. The front wheel 19 is braked by operating a brake lever (not shown) provided in the vicinity of a right grip 41 R (see Fig. 2) of a handlebar 41. A clutch lever 104 is disposed in the vicinity of a left grip 41 L of the handlebar 41. In this embodiment, engagement and disengagement of the clutch can be effected also by operating the clutch lever 104.

Fig. 2 illustrates a structure of a driving system of the motorcycle shown in Fig. 1. The right grip 41 R of the handlebar 41 (see also Fig. 1) constitutes an acceleration grip, and a throttle input sensor 42 is attached to the acceleration grip. The throttle input sensor 42 detects acceleration input (throttle opening input) given by the rider. A shift switch 43 is equipped on the left grip 41 L of the handlebar 41. The shift switch 43 is constituted by a shift-up switch 43a and a shift-down switch 43b, and increases and decreases the shift position in the range between the neutral position and the maximum gear position (6 gear positions in this embodiment) by manual operation. An indicator 45 for showing the current shift position or the like is provided at the center of the handlebar 41.

Throttle valves 46 are attached to throttles 47 constituting an air intake passage. A throttle drive actuator 49 is attached to the right end of a valve stem 48 of the throttle valves 46, while a throttle opening sensor 50 is attached to the left end thereof. The throttle drive actuator 49 and the throttle opening sensor 50 attached to the valve stem 48 constitutes a DBW (drive bi-wire) 51. The DBW 51 opens and closes the throttles 47 through the throttle drive actuator 49 based on the detection results from the throttle opening sensor 50.

An engine revolution sensor 53 is equipped on the right side of a crank shaft 52 of the not-shown engine. The crank shaft 52 is connected to a main shaft 55 via a wet multi-disc-type clutch 54. The clutch 54 has a clutch housing 54a and a clutch boss 54b. A plurality of friction plates 54c are attached to the clutch housing 54a, and a plurality of clutch plates 54d are attached to the clutch boss 54b. Each of the clutch plates 54d are interposed between the adjoining friction plates 54c, 54c. According to the present teaching, the friction clutch is not limited to the wet multi-disc-type clutch, but may be a dry clutch or a single-plate-type clutch, for example. The main shaft 55 has multiple-position (six positions in Fig. 2) transmission gears 57 and a main shaft revolution sensor 56. Each of the transmission gears 57 attached to the main shaft 55 engages with corresponding one of transmission gears 59 attached onto a drive shaft 58 disposed parallel with the main shaft 55. In Fig. 2, the transmission gears 57 and the transmission gears 59 are separated so as to simplify the explanation.

The transmission gears 57 and the transmission gears 59 are attached such that either or both of the gears 57 and 59 other than the selected gears are attached to the main shaft 55 or drive shaft 58 in idling condition. Thus, driving force is transmitted from the main shaft 55 to the drive shaft 58 only through selected one pair of the transmission gears. The condition in which the pair of the transmission gears 57 and 59 engage with each other and transmit driving force from the main shaft 55 to the drive shaft 58 is referred to as gear-in condition.

The operation for selecting the transmission gears 57 and transmission gears 59 and changing gears is conducted by means of a shift cam 79. The shift cam 79 has a plurality of cam grooves 60 (three grooves in Fig. 2), and shift forks 61 are attached to the respective cam grooves 60. The respective shift forks 61 engage with the predetermined transmission gears 57 and 59 of the main shaft 55 and drive shaft 58. When the shift cam 79 rotates, the shift forks 61 move along the cam grooves 60 in the axial direction and accordingly the predetermined transmission gears 57 and 59 engaging with the splines of the main shaft 55 and drive shaft 58 move in the axial direction. Then, the transmission gears 57 and 59 having moved in the axial direction engage with another pair of the transmission gears 57 and 59 attached to the main shaft 55 and drive shaft 58 in idling condition to complete the gear change process. The transmission gears 57 and 59 and the shift cam 79 constitute a transmission 80.

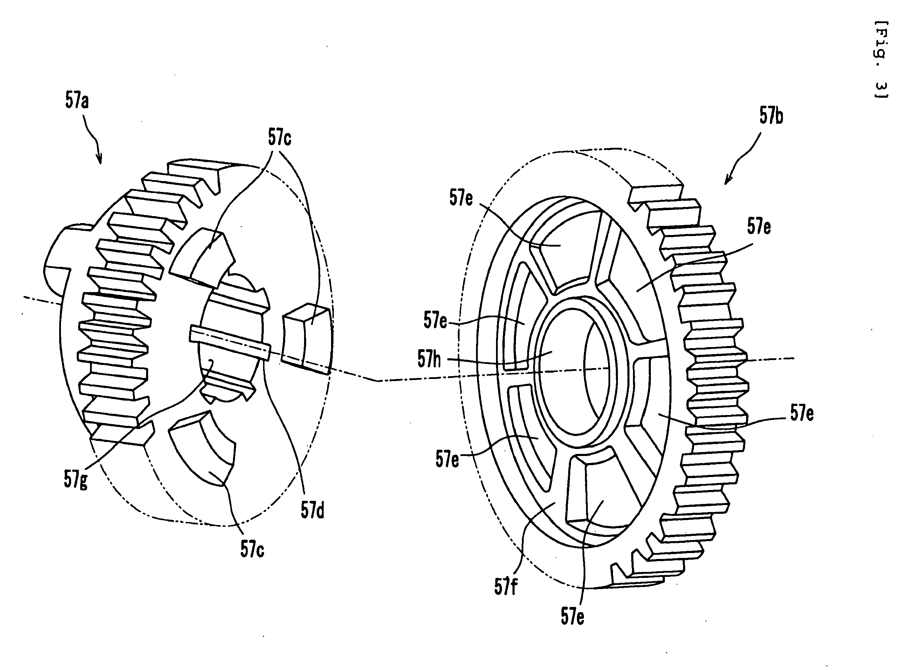

The transmission 80 is a dog-clutch-type transmission. As illustrated in Fig. 3, each of the transmission gears 57 of the transmission 80 has a first gear 57a having engaging projections 57c on its axial end surface, and a second gear 57b having engaging concaves 57e on its axial end surface opposed to the engaging projections 57c. The transmission 80 contains the plural first gears 57a and second gears 57b. Also, the transmission 80 has a plurality of first gears having engaging projections and a plurality of second gears having engaging concaves as the transmission gears 59. Since these structures of the transmission gears 59 are similar to those of the first gears 57a and second gears 57b shown in Fig. 3, explanation of the transmission gears 59 is not repeated herein. Each of the first gears 57a has the three engaging projections 57c disposed at equal intervals on the outer edge of its axial end surface in the circumferential direction. Each of the second gears 57b has the six engaging concaves 57e also disposed at equal intervals in the circumferential direction.

An insertion hole 57g through which the main shaft 55 and the drive shaft 58 are inserted is formed at the axial center of the first gear 57a. A plurality of grooves 57d are provided along the circumference of the insertion hole 57g. The first gear 57a engages with the splines of the main shaft 55 and the drive shaft 58. The second gear 57b has an insertion hole 57h through which the main shaft 55 and the drive shaft 58 are inserted, but the insertion hole 57h does not have grooves around the hole. Thus, the second gear 57b is attached to the main shaft 55 and the drive shaft 58 in idling condition.

When the shift cam 79 (see Fig. 2) rotates, the shift forks 61 move along the cam grooves 60 and accordingly the first gear 57a moves along the splines of the main shaft 55 and the drive shaft 58 in the axial direction. Then, the engaging projections 57c of the first gear 57a come to engagement with the engaging concaves 57e of the second gear 57b, thereby changing the combination of the transmission gears 57 and 59 for transmitting the driving force from the main shaft 55 to the drive shaft 58 and completing the gear change process.

When the shift cam 79 (see Fig. 2) rotates, the first gear 57a moves in the axial direction. At this step, the engaging projections 57c of the first gear 57a do not engage with the engaging concaves 57e of the second gear 57b but contact an axial end surface 57f of the second gear 57b in dog-contact condition in some cases. Under the dog-contact condition, the first gear 57a and second gear 57b do not engage but contact with each other, failing to securely attain gear change.

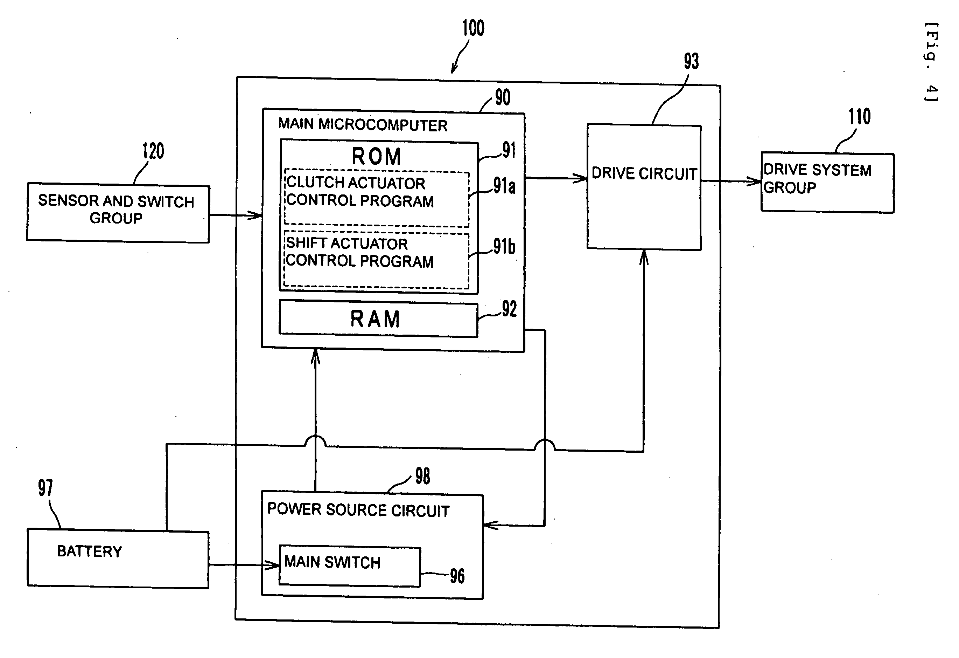

As illustrated in Fig. 2, the clutch 54 and the transmission 80 are operated by a clutch actuator 63 and a shift actuator 65, respectively. The clutch actuator 63 is connected with the clutch 54 via a hydraulic transmission mechanism 64, a rod 71, a lever 72, a pinion 73, and a rack 74. The hydraulic transmission mechanism 64 has a hydraulic cylinder 64a, an oil tank (not shown), a piston (not shown) and other components, and generates hydraulic pressure by the operation of the clutch actuator 63 and transmits the hydraulic pressure to the rod 71. The rod 71 reciprocates in the direction indicated by an arrow A by the operation of the clutch actuator 63, and the lever 72 rotates in the direction indicated by an arrow B. As a result, the clutch 54 is connected or disconnected in accordance with the movement direction of the rack 74. While an electric motor is used as the clutch actuator 63 in this embodiment, other devices such as a solenoid and an electromagnetic valve may be used according to the embodiments. An automated transmission controller according to the embodiments is constituted by the transmission 80, the shift actuator 65, a deceleration mechanism 66, a rod 75, a link mechanism 76, an ECU 100 (see Fig. 4) for controlling the operations of the clutch actuator 63 and shift actuator 65, and an automated clutch device 77 having the clutch 54, the clutch actuator 63, the hydraulic transmission mechanism 64, the rod 71, the lever 72, the pinion 73, and the rack 74.

The shift actuator 65 is connected with the shift cam 79 via the deceleration mechanism 66, the rod 75, and the link mechanism 76. The deceleration mechanism 66 has a plurality of reduction gears (not shown). At the time of gear change, the rod 75 reciprocates in the direction indicated by an arrow C by the operation of the shift actuator 65, and the shift cam 79 rotates through a predetermined angle via the link mechanism 76. Then, the shift forks 61 move along the cam grooves 60 by a predetermined amount in the axial direction. As a result, a pair of the transmission gears 57 and 59 are fixed to the main shaft 55 and the drive shaft 58, respectively, and thus driving force is transmitted from the main shaft 55 to the drive shaft 58. While an electric motor is used as the shift actuator 65 in this embodiment, other devices such as a solenoid and an electromagnetic valve may be used according to the embodiment.

The hydraulic transmission mechanism 64 connected with the clutch actuator 63 has a clutch position sensor 68 for detecting the clutch position (distance between the friction plates 54c and the clutch plates 54d) based on the detection of the stroke position of the piston. While the clutch position is detected by the clutch position sensor 68 which detects the stroke position of the piston in this embodiment, the clutch position may be detected based on the detection of the position of the transmission mechanism provided between the clutch actuator 63 and the clutch 54. For example, the clutch position may be detected based on the detection of the position of the rod 71 or the rack 74. The detection of the clutch position is not limited to indirect detection based on the detected stroke position of the piston as in this embodiment, but may be through direct measurement of the distance between the friction plates 54c and the clutch plates 54d using a sensor. The drive shaft 58 has a vehicle speed sensor 69. The shift cam 79 has a gear position sensor 70 for detecting the gear position (revolution amount of the shift cam).

The ECU 100 (engine control unit) which will be described later controls the operations of the clutch actuator 63 and the shift actuator 65 in accordance with the operation of the shift-up switch 43a or the shift-down switch 43b to execute shift change. More specifically, the sequential processes involving: disconnecting the clutch 54 by the clutch actuator 63; conducting gear change of the transmission gears 57 and 59 by the shift actuator 65; and connecting the clutch 54 by the clutch actuator 63 are performed in this order under a predetermined program or a map at the time of running of the vehicle. When the shift-up switch 43a or the shift-down switch 43b is operated during stop of the motorcycle 10, gear change of the transmission gears 57 and 59 is conducted with the clutch 54 disconnected.

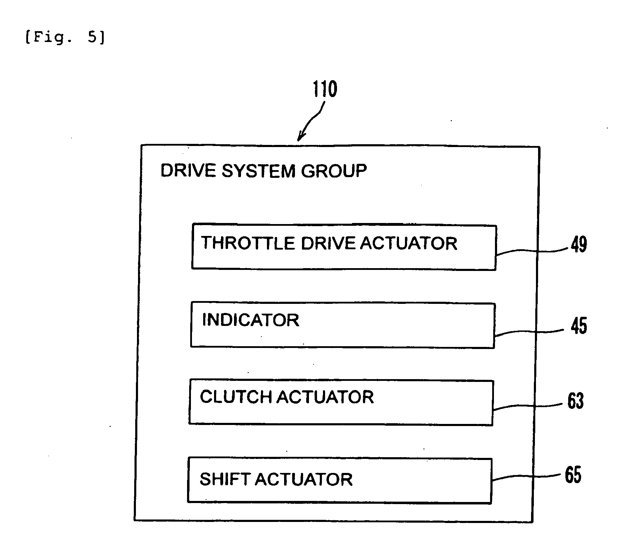

Fig. 4 is a block diagram showing the entire structure of a control system provided on the motorcycle 10. A drive system group 110 is connected with a main microcomputer 90 contained in the ECU 100 via a drive circuit 93. The ECU 100 corresponds to a control unit according to the embodiment. As shown in Fig. 5, the drive system group 110 is constituted by the throttle drive actuator 49, the indicator 45, the clutch actuator 63, and the shift actuator 65 (see also Fig. 2).

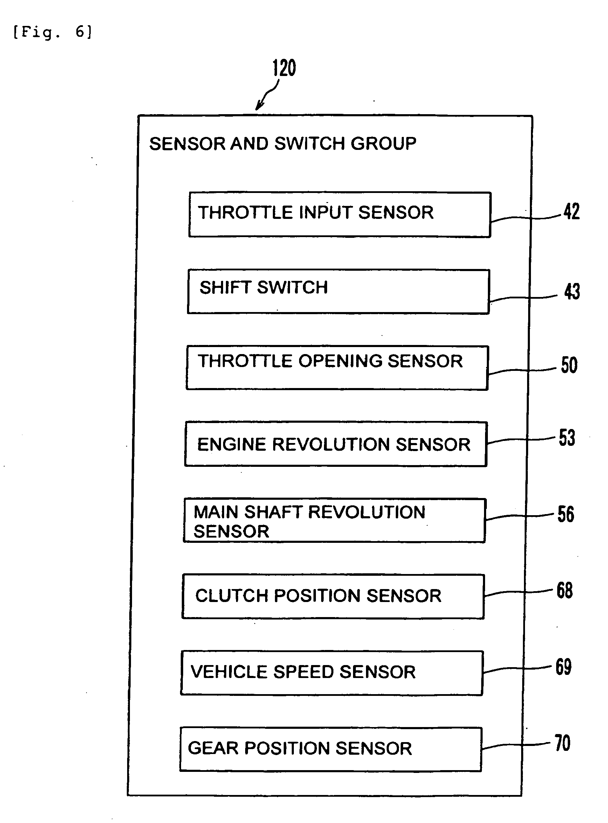

The drive circuit 93 supplies appropriate electric current to the respective devices constituting the drive system group 110 from a battery 97 in response to drive signals sent from the main microcomputer 90. A sensor and switch group 120 is connected with the main microcomputer 90. As shown in Fig. 6, the sensor and switch group is constituted by the throttle input sensor 42, the shift switch 43, the throttle opening sensor 50, the engine revolution sensor 53, the main shaft revolution sensor 56, the clutch position sensor 68, the vehicle speed sensor 69, and the gear position sensor 70 (see also Fig. 2). The detection results from the respective sensors are inputted to the main microcomputer 90, and then the main microcomputer 90 supplies drive signals to the respective devices constituting the drive system group 110 based on the detection results obtained from the respective sensors to control the operations of these devices.

The main microcomputer 90 has a ROM 91 and a RAM 92. The ROM 91 stores a clutch actuator control program 91 a and a shift actuator control program 91 b. The clutch actuator control program 91 a is a program for controlling the operation of the clutch actuator 63. The shift actuator control program 91b is a program for controlling the operation of the shift actuator 65. It is impossible to delete these programs stored in the ROM 91, nor to write new programs or the like to the ROM 91.

For executing the clutch actuator control program 91 a or the shift actuator control program 91 b, either of these programs is given to the RAM 92 and read by the main microcomputer 90. Then, the main microcomputer 90 controls the operation of the clutch actuator 63 or the shift actuator 65 under the program given to the RAM 92.

A power source circuit 98 connected with the battery 97 has a main switch 96 which is turned on or off in accordance with the operation of a key switch (not shown). When the main switch 96 is turned on, the power source circuit 98 converts voltage of the battery 97 into driving voltage for the main microcomputer 90 and supplies the converted voltage to the main microcomputer 90.

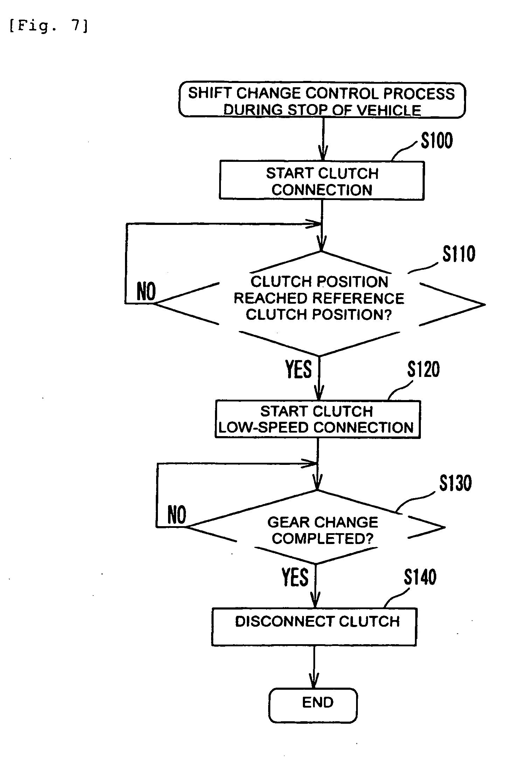

Next, the shift change process during stop of the motorcycle 10 (shift-up process or shift-down process) shown in Figs. 1 through 6 is discussed. Fig. 7 is a flowchart showing the shift change control process during stop of the vehicle. When the shift change requiring operation is carried out, i.e., the shift-up switch 43a or the shift-down switch 43b is operated during stop of the vehicle, the flow of the shift change process during stop of the vehicle is obtained from the main routine currently executed before the shift change process is executed. The procedures shown in Fig. 7 are carried out in shift change to all transmission gear positions. The shift change control process is performed on the occasion when the shift change requiring operation is conducted. However, though the shift change control process is executed when the shift change operation is performed, but it is not limited to this, and therefore the shift change control process may be automatically executed under predetermined conditions such as when the revolution of the engine reaches a predetermined value requiring no shift change requiring operation by the rider. Thus, the shift change control process may be automatically performed in response to so-called auto-shift commands.

First, the ECU 100 starts connection of the clutch 54 in step S100. In this step, the ECU 100 supplies a driving signal to the clutch actuator 63 to require the clutch actuator 63 to start connection of the clutch 54. By the process of this step, the clutch 54 comes to engagement at a constant speed (speed A).

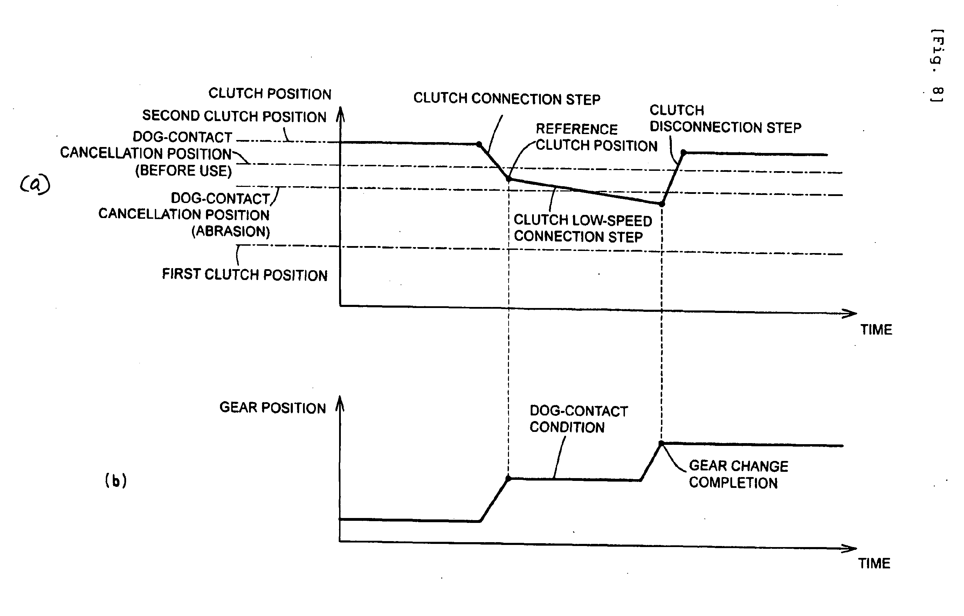

After completion of step S100, it is determined whether the clutch position has reached a reference clutch position in step S110. In this step, the ECU 100 judges whether the clutch position corresponds to the reference clutch position. When it is determined that the clutch position has not reached the reference clutch position yet, the flow returns to step S110 and waits until the clutch position comes to the reference clutch position. The reference clutch position will be explained later with reference to the figures (Figs. 8(a) and 8(b)).

When it is determined that the clutch position has reached the reference clutch position in step S110, low-speed connection of the clutch starts in step S120. In this step, the ECU 100 supplies a driving signal to the clutch actuator 63, and requires the clutch actuator 63 to initiate low-speed connection of the clutch 54. In the process of step S120, the clutch 54 is connected at a lower speed (speed B) than the connection speed in step S100 (speed A). During the low-speed connection of the clutch 54, constant driving force is transmitted to the clutch boss 54b. When dog-contact condition is caused between the first gear 57a and the second gear 57b, both the gears 57a and 57b rotate relative to each other while contacting each other.

After execution of the process in step S120, it is determined whether gear change has been completed in step S130. In this step, the ECU 100 judges whether gear change has been completed based on the detection result from the gear position sensor 70 (see Figs. 2 and 6). When it is determined that gear change has not been completed, the flow returns to step S130 and waits until gear change is completed. When the dog-contact condition is caused and then completion of gear change is determined in step S130, this determination indicates that the dog-contact condition has been canceled. During the processes in steps S120 and S130, gear assist control according to the invention is performed in ECU 100.

When it is determined that gear change has been completed in step S130, disconnection of the clutch is conducted in step S140. In this step, the ECU 100 transmits a driving signal to the clutch actuator 63 and requires the clutch actuator 63 to disconnect the clutch 54. When this step is conducted, the clutch 54 is brought to disengagement at a constant speed until the clutch 54 comes to a predetermined clutch position. After execution of the process in step S140, the shift change control process during stop of the vehicle ends.

Figs. 8(a) and 8(b) show the clutch position with elapse of time when the shift change control process during stop of the vehicle shown in Fig. 7 is performed. Fig. 8(a) shows the clutch position from the start till the end of shift change. Fig. 8(b) shows the transmission gear position (gear position) with elapse of time from the start till the end of shift up.

As shown in Fig. 8(a), the clutch 54 is connected at a constant speed in the clutch connection step. In this step, the connection of the clutch 54 is effected at the fixed speed (speed A). When the clutch position of the clutch 54 reaches the reference clutch position located between a first clutch position and a second clutch position, low-speed connection of the clutch 54 starts. During the low-speed connection, the clutch 54 is connected at the speed B which is slower than the speed A. The first clutch position is a clutch position at which the half-clutch condition ends, which position corresponds to the lowest limit value of the distance between the friction plate 54c and the clutch plate 54d when the stop condition of the vehicle body is maintained without advance under the idling condition of the stopped motorcycle 10. The second clutch position is a clutch position at which the clutch 54 comes to the largest possible disconnection condition for its structure. According to the motorcycle 10 in the first embodiment, the transmission 80 is in the gear-in condition during stop of the vehicle, and the clutch position of the clutch 54 is maintained at the second clutch position while the engine is operating.

When completion of gear change is detected by the gear position sensor 70 during the low-speed connection of the clutch 54, the clutch disconnection step starts. In the clutch disconnection step, the clutch 54 is brought to disengagement at a constant speed. As described above, the low-speed connection of the clutch 54 is initiated after the clutch position of the clutch 54 reaches the reference clutch position, and thereafter the process flow goes to the clutch disconnection step based on the detection of gear change completion in this embodiment.

The reference clutch position has been established in advance based on the clutch position at which the dog-contact condition is canceled (hereinafter referred to as dog-contact cancellation position) before use of the clutch 54 (that is, when the clutch 54 is new). In this embodiment, the reference clutch position is slightly shifted from the dog-contact cancellation position before use of the clutch toward the connection side. The first clutch position and the second clutch position vary due to abrasion of the friction plates 54c or the clutch plates 54d of the clutch 54, differences among individual bodies of the clutch 54, or for other reasons. The dog-contact cancellation position also varies due to the abrasion of the clutch 54 or the like. Figs. 8(a) and (b) show the dog-contact cancellation position before use of the clutch 54 and the dog-contact cancellation position after abrasion thereof. As shown in the figures, the dog-contact cancellation position after abrasion is shifted toward the clutch connection side from the dog-contact cancellation position before use.

Therefore, when the reference clutch position is established based on the dog-contact cancellation position before use of the clutch 54 and then the clutch 54 is used for a long period, the resultant dog-contact cancellation position is shifted from the reference clutch position toward the connection side due to abrasion as shown in Figs. 8(a) and 8(b). As obvious, in case of abrasion of the clutch 54, the first gear 57a and the second gear 57b do not rotate relative to each other even when the clutch position reaches the reference clutch position, and thus the dog-contact condition cannot be cancelled.

According to this embodiment, however, the clutch 54 is further connected at a low speed after the clutch position of the clutch 54 reaches the reference clutch position. Therefore, when the clutch position reaches the reference clutch position, even when the first gear 57a and the second gear 57b under the dog-contact condition do not rotate relative to each other, the clutch 54 gradually comes to engagement and thereafter the clutch position of the clutch 54 reaches the dog-contact cancellation position after abrasion of the clutch 54. After this stage, the clutch position stays on the connection side from the dog-contact cancellation position, and thus the first gear 57a and the second gear 57b under the dog-contact condition can rotate relative to each other, resulting in cancellation of the dog-contact condition.

As described above, according to the motorcycle 10 in this embodiment, rotational driving force is given to the follower side (clutch plate 54d) of the friction clutch by adjusting the engagement condition of the clutch 54 so that the first gear 57a and the second gear 57b can rotate relative to each other. Accordingly, a large volume of current load is not applied to the shift actuator 65, and thus the size of the shift actuator 65 can be decreased. Additionally, since accurate control over the operation of the shift actuator 65 is not required, the size and cost of the ECU 100 can be reduced. Furthermore, since the first gear 57a and second gear 57b are brought to engagement with each other by giving rotational driving force to the follower side of the clutch 54, secure engagement between the first gear 57a and second gear 57b can be attained even when shift change is conducted during stop of the vehicle, resulting in cancellation of the dog-contact condition.

According to this embodiment, the operation of the clutch actuator 63 is controlled such that the clutch 54 is further connected after the clutch position of the clutch 54 reaches the reference clutch position at a lower speed than the connection speed until the clutch 54 reaches the reference clutch position. Thus, when the clutch position having come to the reference clutch position does not reach the dog-contact cancellation position and thus the first gear 57a and second gear 57b cannot be rotated relative to each other, the clutch 54 is gradually brought to engagement until the clutch position reaches the dog-contact cancellation position. After this stage, the clutch position of the clutch 54 stays on the connection side from the dog-contact canceling position. Under this condition, the first gear 57a and the second gear 57b can be rotated relative to each other when the dog-contact condition is caused, and thus the dog-contact condition can be canceled.

### Second Embodiment

According to the first embodiment, the low-speed connection of the clutch 54 is ended on the occasion when completion of gear change is detected by the gear position sensor 70. In a second embodiment, however, the low-speed connection of the clutch 54 is ended on the occasion when the revolution of the main shaft 55 detected by the main shaft revolution sensor 56 reaches a predetermined value.

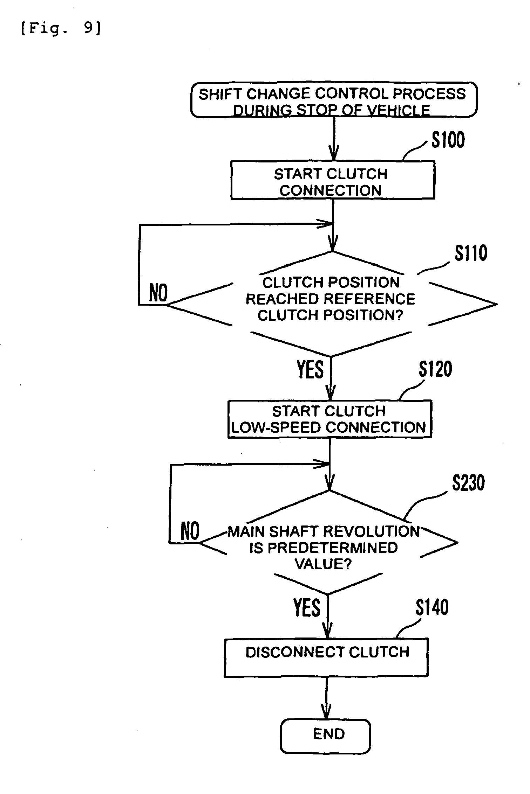

Fig. 9 is a flowchart showing a shift change control process during stop of a motorcycle in the second embodiment. According to the shift change control process during stop of the vehicle shown in Fig. 9, step S230 is executed in lieu of step S130 in the shift change control process during stop of the vehicle shown in Fig. 7. In step S230, the ECU 100 determines whether the revolution of the main shaft has reached a predetermined value.

That is, the ECU 100 judges whether the revolution of the main shaft 55 detected by the main shaft revolution sensor 56 has reached the predetermined value.

When the clutch position is gradually shifted to the connection side from the second clutch position during stop of the vehicle, driving force is given to the main shaft 55 via the clutch 54. However, when the driving force given to the main shaft 55 is small under the dog-contact condition, the main shaft 55 does not rotate. When the driving force given to the main shaft 55 is gradually increased, the first gear 57a and the second gear 57b come to rotate relative to each other while contacting each other and at this stage the main shaft 55 starts rotating. In this embodiment, the revolution of the main shaft 55 at that time is established as the predetermined value mentioned above. When the revolution detected by the main shaft revolution sensor 56 reaches the predetermined value, the low-speed connection of the clutch 54 (step S120) ends to proceed to the clutch disconnection process in step S140. According to the second embodiment, advantages substantially similar to those in the first embodiment can be offered.

The process flow may advance to the clutch disconnection process immediately after the revolution of the main shaft reaches the predetermined value or after elapse of a predetermined time from the time when the revolution of the main shaft reaches the predetermined value. Since the drive shaft 58 is stopped during stop of the vehicle, the main shaft 55 rotates at the moment when the dog-contact condition is cancelled but stops rotating after the dog-contact condition is cancelled. Thus, the process flow may go to the clutch disconnection process after the revolution of the main shaft having reached the predetermined value is decreased to zero.

### Third Embodiment

According to the following third embodiment, the low-speed connection of the clutch 54 is ended on the occasion when the difference between the revolution of the main shaft 55 detected by the main shaft revolution sensor 56 and the revolution of the drive shaft 58 detected by the vehicle speed sensor 69 reaches a predetermined value.

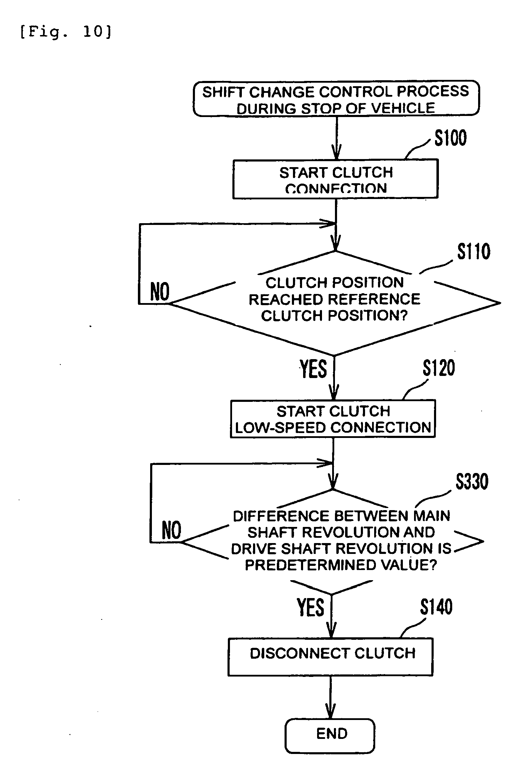

Fig. 10 is a flowchart showing a shift change control process during stop of a motorcycle in the third embodiment. According to the shift change control process during stop of the vehicle shown in Fig. 10, step S330 is executed in lieu of step S130 in the shift change control process during stop of the vehicle shown in Fig. 7. In step S330, the ECU 100 determines whether the revolutions of the main shaft and the drive shaft have reached a predetermined value. That is, the ECU 100 judges whether the difference between the revolution of the main shaft 55 detected by the main shaft revolution sensor 56 and the revolution of the drive shaft 58 detected by the vehicle speed 69 has reached the predetermined value.

As discussed above, when the dog-contact condition during stop of the vehicle is cancelled, the first gear 57a and second gear 57b rotate relative to each other while contacting each other and at this moment the main shaft 55 rotates. However, the drive shaft 58 stops during stop of the vehicle. In this embodiment, the difference in revolution between the two shafts at this time is established as the predetermined value, and the respective differences in revolution are calculated based on the detection results of the main shaft revolution sensor 56 and the vehicle speed sensor 69. When the difference in revolution reaches the predetermined value, the low-speed connection of the clutch 54 (step S120) ends to proceed to the clutch disconnection process in step S140. According to the third embodiment, advantages substantially similar to those in the first embodiment can be offered.

### Fourth Embodiment

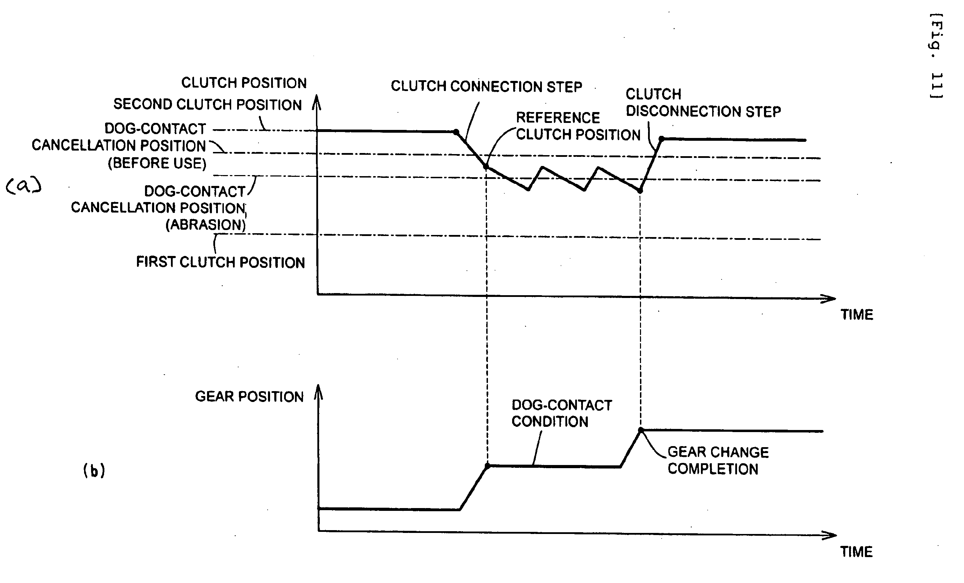

Figs. 11 (a) and 11 (b) show the clutch position with elapse of time when a shift change control process is conducted during stop of a motorcycle according to a fourth embodiment. According to the motorcycle in the fourth embodiment shown in Figs. 11(a) and 11(b), the clutch 54 is connected until the clutch position reaches the reference clutch position, and thereafter the low-speed connection and disconnection of the clutch 54 are repeated. When completion of gear change is detected by the gear position sensor 70 during the low-speed connection and disconnection of the clutch 54 is repeated, the clutch disconnection step is initiated. The control of repeating the low-speed connection of the clutch 54 shown in Figs. 11 (a) and 11 (b) also corresponds to the gear change assist control according to the present teaching.

As described above, according to the motorcycle in the above embodiments, the clutch position of the clutch 54 reaches the dog-contact cancellation position after abrasion while the clutch 54 is repeating connection and disconnection. Thereafter, the clutch position further stays on the connection side. Accordingly, the first gear 57a and second gear 57b can be appropriately rotated relative to each other when the dog-contact condition is caused, and thus the dog-contact condition can be cancelled.

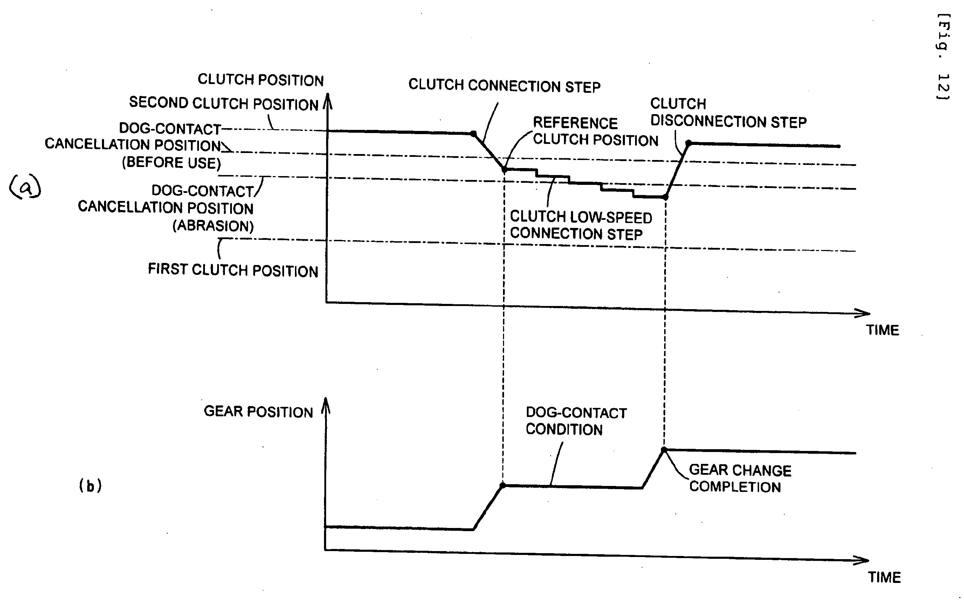

While the clutch 54 is connected at the constant speed during the low-speed connection of the clutch 54 in the first embodiment, the clutch 54 may be connected stepwise as shown in Figs. 12(a) and 12(b) during the low-speed connection of the clutch 54.

While the gear change assist control under which the friction plates 54c and the clutch plates 54d are connected at a low speed at the time of shift change during stop of the vehicle is discussed in the above embodiments, the gear change assist control according to the embodiments may be conducted not only at the time of shift change during stop of the vehicle but also at the time of shift change during running of the vehicle.

As described above, the present teaching is applicable to an automated transmission controller and a vehicle including the automated transmission controller.

An automated transmission controller according to a preferred first aspect includes: a friction clutch; a dog-clutch-type transmission having a plurality of first gears on which engaging projections are formed and a plurality of second gears on which engaging concaves engaging with the engaging projections are formed, the engaging projections of the first gears engaging with the corresponding engaging concaves of the second gears to effect gear change; an automated transmission unit which has an electrically powered actuator and conducts connection and disconnection of the friction clutch and gear change of the dog-clutch-type transmission; a control unit for controlling the operation of the actuator; and a gear position sensor for detecting the gear position of the dog-clutch-type transmission. The control unit performs gear change assist control under which, at the time of shift change, the clutch position of the friction clutch is shifted to the connection side at a connection speed lower than a connection speed until the clutch position reaches a reference clutch position which is located on the disconnection side from a first clutch position where the half-clutch condition ends and on the connection side from a second clutch position where the friction clutch is in the largest possible disconnection condition for its structure, during a period from the time when the clutch position reaches the reference clutch position until the time when engagement condition between the engaging projections and the engaging concaves is detected by the gear position sensor.

An automated transmission controller according to a preferred second aspect includes: a friction clutch; a dog-clutch-type transmission having a plurality of first gears on which engaging projections are formed and a plurality of second gears on which engaging concaves engaging with the engaging projections are formed, the engaging projections of the first gears engaging with the corresponding engaging concaves of the second gears to effect gear change; an automated transmission unit which has an electrically powered actuator and conducts connection and disconnection of the friction clutch and gear change of the dog-clutch-type transmission; a control unit for controlling the operation of the actuator; and a main shaft revolution sensor for detecting the revolution of a main shaft connected with the follower side of the friction clutch. The control unit performs gear change assist control under which, at the time of shift change, the clutch position of the friction clutch is shifted to the connection side at a connection speed lower than a connection speed until the clutch position reaches a reference clutch position which is located on the disconnection side from a first clutch position where the half-clutch condition ends and on the connection side from a second clutch position where the friction clutch is in the largest possible disconnection condition for its structure, during a period from the time when the clutch position reaches the reference clutch position until the time when the revolution of the main shaft detected by the main shaft revolution sensor reaches a predetermined value.

An automated transmission controller according to a preferred third aspect includes: a friction clutch; a dog-clutch-type transmission having a plurality of first gears on which engaging projections are formed and a plurality of second gears on which engaging concaves engaging with the engaging projections are formed, the engaging projections of the first gears engaging with the corresponding engaging concaves of the second gears to effect gear change; an automated transmission unit which has an electrically powered actuator and conducts connection and disconnection of the friction clutch and gear change of the dog-clutch-type transmission; a control unit for controlling the operation of the actuator; a main shaft revolution sensor for detecting the revolution of a main shaft connected with the follower side of the friction clutch; and a drive shaft revolution sensor for detecting the revolution of a drive shaft connected with the main shaft via the dog-clutch-type transmission. The control unit performs gear change assist control under which, at the time of shift change, the clutch position of the friction clutch is shifted to the connection side at a connection speed lower than a connection speed until the clutch position reaches a reference clutch position which is located on the disconnection side from a first clutch position where the half-clutch condition ends and on the connection side from a second clutch position where the friction clutch is in the largest possible disconnection condition for its structure, during a period from the time when the clutch position reaches the reference clutch position until the time when the difference between the revolution of the main shaft detected by the main shaft revolution sensor and the revolution of the drive shaft detected by the drive shaft revolution sensor reaches a predetermined value.

In the automated transmission controller according to the first through third preferred aspects, rotational driving force is given to the follower side of the friction clutch by adjusting the engagement condition of the friction clutch so that the first gear and the second gear can rotate relative to each other. Accordingly, a large volume of current load is not applied to the actuator, and thus the size of the actuator is decreased. Additionally, since accurate control over the operation of the actuator is not required, the size and cost of the control unit for the actuator can be reduced. Furthermore, since the first gear and second gear are brought to engagement with each other by giving rotational driving force to the follower side of the friction clutch, secure engagement between both the gears can be attained even when shift change is conducted during stop of the vehicle.

The clutch positions of the friction clutch at which the half-clutch control is initiated and the friction clutch comes to the largest possible disconnection condition for its structure vary due to abrasion of the friction plates or the clutch plates. Moreover, these clutch positions vary due to differences among individual bodies of the friction clutch. According to the embodiments, however, the friction clutch is further connected at a low speed after the clutch position of the friction clutch reaches the reference clutch position, and thus the clutch position securely comes to a position where the first gear and the second gear rotate relative to each other when the dog-contact condition is caused even in the case of occurrence of abrasion of the friction clutch or differences among individual bodies of the friction clutch. Accordingly, gear change can be securely effected even when abrasion of the friction clutch or differences of individual bodies of the friction clutch are caused.

The automated transmission controller according to the embodiments can reduce the size of the actuator and decrease the size and cost of the control unit for the actuator. Moreover, the automated transmission controller can securely conduct gear change even at the time of shift change during stop of the vehicle. Furthermore, the automated transmission controller can securely effect gear change even when abrasion of the friction clutch or differences among individual bodies of the friction clutch are caused.

Further, according to a fourth preferred aspect, the control unit performs the gear change assist control after the clutch position of the friction clutch is shifted from the second clutch position to the reference clutch position at the time of shift change during stop of a vehicle, and then the control unit shifts the clutch position of the friction clutch to the disconnection side.

Further, according to a fifth preferred aspect, the control unit shifts the clutch position of the friction clutch at a constant speed at the time of the gear change assist control.

Further, according to a sixth preferred aspect, the control unit shifts the clutch position of the friction clutch stepwise at the time of the gear change assist control.

Further, according to a seventh preferred aspect, there is provided a vehicle including the automated transmission controller according to one of the first to third aspects.

Further, according to an eighth preferred aspect, the vehicle is a saddle-type vehicle.

The description above further discloses, as a particularly preferred aspect, in order to provide an automated transmission controller capable of reducing the size of a shift actuator and decreasing the size and cost of its control unit, and securely effecting engagement between respective gears even when shift change is conducted during stop of a vehicle, an embodiment of a rotational driving force which is given to the follower side (clutch plate) of a friction clutch by adjusting the engagement condition of the clutch so that a first gear and a second gear of a dog-clutch-type transmission can rotate relative to each other. At the time of shift change during stop of the vehicle, the clutch is further connected at a low speed after connection of the clutch until it reaches a reference clutch position.

## Claims

1. Gear change process for an automated manual transmission unit of a vehicle, said transmission unit including a friction clutch (54) and a dog-clutch-type transmission (80), said gear change process comprising a gear change assist control adjusting the engagement condition of the friction clutch (54), in that during stop of the vehicle the friction clutch (54) is connected to establish a dog-contact condition to apply a rotational driving force to a follower side of the friction clutch (54) so that a first gear (57a) and a second gear (57b) of a dog-clutch-type transmission (80) can rotate relative to each other, wherein after the gear change assist control, the clutch position of the friction clutch (54) is shifted to the disconnection side thereof, **characterized in that** the friction clutch (54) is connected at a first speed (A), and upon reaching a reference clutch position, the friction clutch (54) is further connected at a second speed (B) lower that the first speed (A) to establish the dog-contact condition.

2. Gear change process according to claim 1, **characterized in that** the reference clutch position is located between a shift clutch position, at which a half-clutch state finishes, and a second clutch position, at which the friction clutch (54) is in a mechanical maximum disengaged state.

3. Gear change process according to claim 1 or 2, **characterized in that** the reference clutch position is established in advance based on the clutch position at which the dog-contact condition is canceled before use of the friction clutch (54).

4. Gear change process according to one of the claims 1 to 3, **characterized in that** friction plates (54c) and clutch plates (54d) of the friction clutch (54) are connected at the second speed (B) at the time of gear change during stop of the vehicle.

5. Automated transmission for a vehicle, said automated transmission comprising a friction clutch (54), a dog-clutch-type transmission (80), an electric actuator (63,65) for engaging and disengaging the friction clutch (54) and performing a gear change using gears (57a,57b) of the dog-clutch-type transmission (80), and a control unit, wherein the control unit, at the time of the gear change during stop of the vehicle is configured to connect the friction clutch (54) to establish a dog-contact condition to apply a rotational driving force to a follower side of the friction clutch (54) so that a first gear (57a) and a second gear (57b) of a dog-clutch-type transmission (80) can rotate relative to each other, wherein after the gear change assist control, the control unit is configured to shift the clutch position of the friction clutch (54) to the disconnection side thereof, **characterized in that** said control unit is configured to connect the friction clutch (54) at a first speed (A), and upon reaching a reference clutch position, to perform a gear change assist control by further connecting the friction clutch (54) at a second speed (B) lower than the first speed (A) to establish the dog-contact condition.

6. Automated transmission according to claim 5, **characterized in that** the dog-clutch-type transmission (80) comprises a plurality of first gears (57a) on which engaging projections (57c) are formed and a plurality of second gears (57b) on which engaging concaves (57e) engaging with the engaging projections (57c) are formed, the engaging projections (57c) of the first gears (57a) engaging with the corresponding engaging concaves (57e) of the second gears (57b) to effect gear change.

7. Automated transmission according to claim 5 or 6, **characterized in that** the electric actuator (63,65) conducts connection and disconnection of the friction clutch (54) and gear change of the dog-clutch-type transmission (80), and wherein the control unit controls the operation of the said electric actuator (63,65).

8. Automated transmission according to claim 6 or 7, **characterized by** a gear position sensor (70) for detecting the gear position of the dog-clutch-type transmission (80), wherein the control unit performs the gear change assist control under which, at the time of gear change, the clutch position of the friction clutch (54) is shifted to a connection side at the second speed (B) lower than the first speed (A) applied until the clutch position reaches the reference clutch position, and wherein the reference clutch position is located on a disconnection side from a first clutch position where a half-clutch condition ends, and is located on the connection side from a second clutch position where the friction clutch (54) is in the largest possible disconnection condition for its structure, during a period from the time when engagement condition between the engaging projections (57c) and the engaging concaves (57e) of the first and second gears (57a,57b) is detected by the gear position sensor (70).

9. Automated transmission according to one of the claims 5 to 7, **characterized by** a main shaft revolution sensor (56) for detecting a revolution of a main shaft (55) connected with the follower side of the friction clutch (54), wherein the control unit performs the gear change assist control under which, at the time of gear change, the clutch position of the friction clutch (54) is shifted to a connection side at the second speed (B) lower than the first speed (A) applied until the clutch position reaches the reference clutch position, and wherein the reference clutch position which is located on a disconnection side from a first clutch position where a half-clutch condition ends and is located on the connection side from a second clutch position where the friction clutch (54) is in the largest possible disconnection condition for its structure, during a period from the time when the clutch position reaches the reference clutch position until the time when the revolution of the main shaft (55) detected by the main shaft revolution sensor (56) reaches a predetermined value.

10. Automated transmission according to one of the claims 5 to 7, **characterized by** a main shaft revolution sensor (56) for detecting the revolution of a main shaft (55) connected with the follower side of the friction clutch (54), and a drive shaft revolution sensor (69) for detecting the revolution of a drive shaft (58) connected with the main shaft (55) via the dog-clutch-type transmission (80), wherein the control unit performs the gear change assist control under which, at the time of gear change, the clutch position of the friction clutch (54) is shifted to a connection side at the second speed (B) lower than the first speed (A) applied until the clutch position reaches the reference clutch position, and wherein the reference clutch position which is located on a disconnection side from a first clutch position where a half-clutch condition ends and is located on the connection side from a second clutch position where the friction clutch (54) is in the largest possible disconnection condition for its structure, during a period from the time when the clutch position reaches the reference clutch position until the time when the difference between the revolution of the main shaft (55) detected by the main shaft sensor (56) and the revolution of the drive shaft (58) detected by the drive shaft revolution sensor (69) reaches a predetermined value.

11. Automated transmission according to one of the claims 5 to 10, wherein the control unit shifts the clutch position of the friction clutch (54) at a constant speed at the time of the gear change assist control.

12. Automated transmission controller according to one of the claims 5 to 10, wherein the control unit shifts the clutch position of the friction clutch (54) stepwise at the time of the gear change assist control.

13. Vehicle, in particular saddle-type vehicle, having an automated transmission according to one of the claims 5 to 12.

## Patentansprüche

1. Gangwechselverfahren für eine automatisierte manuelle Getriebeeinheit eines Fahrzeuges, wobei die Getriebeeinheit, die eine Reibungskupplung (54) und ein Getriebe (80) vom Klauenkupplungs- Typ enthält, wobei das Gangwechselverfahren einen Gangwechselunterstützungssteuerung aufweist, die den Eingriffszustand der Reibungskupplung (54) einstellt, derart, dass während des Stopps des Fahrzeuges die Reibungskupplung (54) eingerückt ist, um einen Klauenkontakt- Zustand herzustellen, um eine Drehantriebskraft auf eine Abtriebsseite der Reibungskupplung (54) aufzubringen, so dass ein erstes Zahnrad (57a) und ein zweites Zahnrad (57b) des Getriebes (80) vom Klauenkupplungs- Typ sich relativ zueinander drehen können, wobei nach der Gangwechselunterstützungssteuerung die Kupplungsposition der Reibungskupplung (54) zu der Ausrückseite derselben verschoben wird, **dadurch gekennzeichnet, dass** die Reibungskupplung (54) mit einem ersten Gang (A) verbunden ist und nach dem Erreichen einer Referenzkupplungsposition die Reibungskupplung (54) außerdem mit einem zweiten Gang(B), niedriger als der erste Gang, verbunden ist, um den Klauenkontaktzustand herzustellen.

2. Gangwechselverfahren nach Anspruch 1, **dadurch gekennzeichnet, dass** die Referenzkupplungsposition angeordnet ist zwischen einer Schaltkupplungsposition, bei der ein Halbkupplungseingriffszustand endet, und einer zweiten Kupplungsposition, bei der die Reibungskupplung (54) in einem mechanisch maximalen Außer- EingriffsZustand ist.

3. Gangwechselverfahren nach Anspruch 1 oder 2, **dadurch gekennzeichnet, dass** die Referenzkupplungsposition im Voraus auf der Grundlage der Kupplungsposition hergestellt wird, bei der der Klauenkontaktzustand vor dem Einsatz der Reibungskupplung (54) aufgehoben wird.

4. Gangwechselverfahren nach einem der Ansprüche 1 bis 3, **dadurch gekennzeichnet, dass** die Reibungsplatten (54c) der Reibungskupplung (54) mit dem zweiten Gang (B) zu der Zeit des Gangwechsels während des Stopps des Fahrzeuges verbunden sind.

5. Automatisiertes Getriebe für ein Fahrzeug, wobei das automatisierte Getriebe aufweist eine Reibungskupplung (54), ein Getriebe (80) vom Klauenkupplungs- Typ, einen elektrischen Betätiger (63, 65) zum In- Eingriff- Bringen oder Außer- Eingriff-Bringen der Reibungskupplung (54) und zum Ausführen eines Gangwechsels unter Verwendung der Zahnräder (57a, 57b) des Getriebes (80) vom Klauenkupplungs-Typ, und eine Steuereinheit, wobei die Steuereinheit zu der Zeit des Gangwechsels während des Stopps des Fahrzeuges konfiguriert ist, die Reibungskupplung (54) in Eingriff zu bringen, um einen Klauenkupplungszustand herzustellen, um eine Drehantriebskraft auf eine Abtriebsseite der Reibungskupplung (54) aufzubringen, so dass ein erstes Zahnrad (57a) und ein zweites Zahnrad (57b) des Getriebes (80) vom Klauenkupplungs- Typ sich relativ zueinander drehen können, wobei nach der Gangwechselunterstützungssteuerung die Steuereinheit konfiguriert ist, die Kupplungsposition der Reibungskupplung (54) zu der Außer- Eingriffseite derselben zu verschieben, **dadurch gekennzeichnet, dass** die Steuereinheit konfiguriert ist, die Reibungskupplung (54) mit einem ersten Gang (A) zu verbinden und nach dem Erreichen einer Referenzkupplungsposition eine Gangwechselunterstützungssteuerung auszuführen durch weiteres Verbinden der Reibungskupplung (54) mit einem zweiten Gang (B), niedriger als der erste Gang (A), um den Klauenkupplungszustand herzustellen.

6. Automatisiertes Getriebe nach Anspruch 5, **dadurch gekennzeichnet, dass** das Getriebe (80) vom Klauenkupplungs- Typ aufweist eine Mehrzahl von ersten Zahnrädern (57a), an denen Eingriffsvorsprünge (57c) gebildet sind, und eine Mehrzahl von zweiten Zahnrädern (57b), an denen Eingriffsausnehmungen (57e) mit den Eingriffsvorsprüngen (57c) in Eingriff bringbar sind, ausgebildet, wobei die Eingriffsvorsprünge (57c) der ersten Zahnräder (57a) mit den entsprechenden Eingriffshöhlungen (57e) der zweiten Zahnräder (57b) im Eingriff sind, um den Gangwechsel zu bewirken.

7. Automatisiertes Getriebe nach Anspruch 5 oder 6, **dadurch gekennzeichnet, dass** der elektrische Betätiger (63, 65) eine Verbindung oder ein Lösen der Reibungskupplung (54) und einen Gangwechsel des Getriebes (80) vom Klauenkupplungs- Typ ausführt und wobei die Steuereinheit die Arbeitsweise des elektrischen Betätigers (63, 65) steuert.

8. Automatisiertes Getriebe nach Anspruch 6 oder 7, **gekennzeichnet durch** einen Zahnradpositionssensor (70), um die Zahnradposition des Getriebes (80) vom Klauenkupplungs- Typ zu erfassen, wobei die Steuereinheit die Gangwechselunterstützungssteuerung ausführt, unter der, zu der Zeit des Gangwechsels, die Kupplungsposition der Reibungskupplung (54) verschoben wird zu einer Verbindungsseite mit dem zweiten Gang (B), der niedriger als der erste Gang (A) ist, angelegt bis die Kupplungsposition die Referenzkupplungsposition erreicht und wobei die Referenzkupplungsposition auf einer Auskuppelseite aus einer ersten Kupplungsposition angeordnet ist, wo ein Halb- Kupplungszustand endet, und auf der Verbindungsseite von einer zweiten Kupplungsposition angeordnet wird, wo die Reibungskupplung (54) in dem größtmöglichen Auskuppelzustand für ihren Aufbau ist, während einer Zeitdauer von der Zeit, wenn der Eingriffszustand zwischen den Eingriffsvorsprüngen (57c) und den Eingriffsausnehmungen (57e) der ersten und zweiten Zahnräder (57a, 57b) **durch** den Zahnradpositionssensor (70) erfasst wird.

9. Automatisiertes Getriebe nach einem der Ansprüche 5 bis 7, **gekennzeichnet durch** einen Hauptwellendrehzahlsensor (56) zum Erfassen einer Drehung einer Hauptwelle (55), verbunden mit der Abtriebsseite der Reibungskupplung (54), wobei die Steuereinheit die Gangwechselunterstützungssteuerung ausführt unter der, zu der Zeit des Gangwechsels, die Kupplungsposition der Reibungskupplung (54) auf eine Verbindungsseite in den zweiten Gang (B), der niedriger als der erste Gang (A) ist, verschoben wird, angewandt bis die Kupplungsposition die Referenzkupplungsposition erreicht, und wobei die Referenzkupplungsposition, die auf einer Auskuppelseite von einer ersten Kupplungsposition angeordnet ist, wo ein Halb- Kupplungseingriffszustand endet und auf der Verbindungsseite von einer zweiten Kupplungsposition angeordnet ist, wo die Reibungskupplung (54) in dem größt- möglichen Auskuppelzustand für ihren Aufbau ist, während einer Zeitdauer von der Zeit, wenn die Kupplungsposition die Referenzkupplungsposition erreicht, bis zu der Zeit, wenn die Drehzahl der Hauptwelle (55), erfasst **durch** den Hauptwellendrehzahlsensor (56), einen vorbestimmten Wert erreicht.

10. Automatisiertes Getriebe nach einem der Ansprüche 5 bis 7, **gekennzeichnet durch** einen Hauptwellendrehzahlsensor (56) zum Erfassen einer Drehung einer Hauptwelle (55), verbunden mit der Abtriebsseite der Reibungskupplung (54), und einen Antriebswellendrehzahlsensor (69) zum Erfassen der Drehzahl einer Antriebswelle (58), verbunden mit der Hauptwelle (55) über das Getriebe (80) vom Klauenkupplungs-Typ, wobei die Steuereinheit die Gangwechselunterstützungssteuerung ausführt, unter der, zu der Zeit des Gangwechsels, die Kupplungsposition der Reibungskupplung (54) auf eine Verbindungsseite mit dem zweiten Gang, niedriger als der erste Gang (A), verschoben wird, angewandt bis die Kupplungsposition die Referenzkupplungsposition erreicht, und wobei die Referenzkupplungsposition, die auf einer Auskuppelseite von der ersten Kupplungsposition angeordnet ist, wo ein Halb- Kupplungszustand endet und auf der Verbindungsseite von einer zweiten Kupplungsposition angeordnet ist, wo die Reibungskupplung (54) in dem größtmöglichen Auskuppelzustand für ihren Aufbau ist, während einer Zeitdauer von der Zeit, wenn die Kupplungsposition die Referenzkupplungsposition erreicht, bis zu der Zeit, wenn die Differenz zwischen der Drehzahl der Hauptwelle (55), erfasst **durch** den Hauptwellendrehzahlsensor (56) und die Drehzahl der Antriebswelle (58), erfasst **durch** den Antriebswellendrehzahlsensor (69), einen vorbestimmten Wert erreicht.

11. Automatisiertes Getriebe nach einem der Ansprüche 5 bis 10, wobei die Steuereinheit die Kupplungsposition der Reibungskupplung (54) bei einer konstanten Drehzahl zu der Zeit der Gangwechselunterstützungssteuerung verschiebt.

12. Automatisiertes Getriebe nach einem der Ansprüche 5 bis 10, wobei die Steuereinheit die Kupplungsposition der Reibungskupplung (54) schrittweise zu der Zeit der Gangwechselunterstützungssteuerung verschiebt.

13. Fahrzeug, insbesondere vom Grätschsitz- Typ, die ein automatisiertes Getriebe nach einem der Ansprüche 5 bis 12 hat.

## Revendications

1. Procédé de changement de vitesse dans une unité de transmission manuelle automatique d'un véhicule, ladite unité de transmission comprenant un embrayage à friction (54) et une transmission de type embrayage à crabots (80), ledit procédé de changement de vitesse comprenant une commande d'assistance au changement de vitesse ajustant l'état de mise en prise de l'embrayage à friction (54), **caractérisé en ce que** lors de l'arrêt du véhicule, l'embrayage à friction (54) est couplé pour établir un état de contact des crabots afin d'appliquer une force d'entraînement en rotation à un côté suiveur de l'embrayage à friction (54) de telle sorte qu'un premier engrenage (57a) et un second engrenage (57b) d'une transmission de type embrayage à crabots (80) puissent tourner l'un par rapport à l'autre, dans lequel après la commande d'assistance au changement de vitesse, la position d'embrayage de l'embrayage à friction (54) passe au côté de désaccouplement de celui-ci, **caractérisé en ce que** l'embrayage à friction (54) est couplé à une première vitesse (A) et, lorsqu'il atteint une position d'embrayage de référence, l'embrayage à friction (54) est en outre couplé à une seconde vitesse (B) inférieure à la première vitesse (A) afin d'établir l'état de contact des crabots.

2. Procédé de changement de vitesse selon la revendication 1, **caractérisé en ce que** la position d'embrayage de référence est située entre une position d'embrayage de passage des vitesse, au niveau de laquelle un état de demi-embrayage se termine, et une seconde position d'embrayage, au niveau de laquelle l'embrayage à friction (54) se trouve dans un état hors prise mécanique maximal.

3. Procédé de changement de vitesse selon la revendication 1 ou 2, **caractérisé en ce que** la position d'embrayage de référence est établie à l'avance sur la base de la position d'embrayage au niveau de laquelle l'état de contact des crabots est annulée avant utilisation de l'embrayage à friction (54).

4. Procédé de changement de vitesse selon l'une des revendications 1 à 3, **caractérisé en ce que** des plaques de friction (54c) et des disques d'embrayage (54d) de l'embrayage à friction (54) sont couplés à la seconde vitesse (B) au moment du changement de vitesse lors de l'arrêt du véhicule.

5. Transmission automatique d'un véhicule, ladite transmission automatique comprenant un embrayage à friction (54), une transmission de type embrayage à crabots (80), un actionneur électrique (63, 65) pour mettre en prise et hors prise l'embrayage à friction (54) et effectuer un changement de vitesses à l'aide d'engrenages (57a, 57b) de la transmission de type à embrayage à crabots (80) ; et une unité de commande, dans lequel l'unité de commande, au moment du changement de vitesse lors de l'arrêt du véhicule est configurée pour coupler l'embrayage à friction (54) afin d'établir un état de contact des crabots afin d'appliquer une force d'entraînement en rotation sur un côté suiveur de l'embrayage à friction (54) de telle sorte qu'un premier engrenage (57a) et un second engrenage (57b) d'une transmission de type embrayage à crabots (80) puissent tourner l'un par rapport à l'autre, dans lequel après la commande assistée de changement de vitesse, l'unité de commande est configurée pour passer de la position d'embrayage de l'embrayage à friction (54) au côté de désaccouplement de celui-ci, **caractérisé en ce que** ladite unité de commande est configurée pour coupler l'embrayage à friction (54) à une première vitesse (A), et lorsqu'une position d'embrayage de référence est atteinte, pour exécuter une commande d'assistance au changement de vitesse en couplant en outre l'embrayage à friction (54) à une seconde vitesse (B) inférieure à la première vitesse (A) afin d'établir l'état de contact des crabots.

6. Transmission automatique selon la revendication 5, **caractérisée en ce que** la transmission de type embrayage à crabots (80) comprend une pluralité de premiers engrenages (57a) sur lesquels sont formés des bossages de mise en prise (57c) et une pluralité de seconds engrenages (57b) sur lesquels sont formés des éléments concaves de mise en prise (57e) se mettant en prise avec les bossages de mise en prise (57c), les bossages de mise en prise (57c) des premiers engrenages (57a) se mettant en prise avec les éléments concaves de mise en prise correspondants (57e) des seconds engrenages (57b) pour effectuer le changement de vitesse.

7. Transmission automatique selon la revendication 5 ou 6, **caractérisée en ce que** l'actionneur électrique (63, 65) opère l'accouplement et le désaccouplement de l'embrayage à friction (54) et le changement de vitesse de la transmission de type embrayage à crabots (80) et dans laquelle l'unité de commande commande le fonctionnement dudit actionneur électrique (63, 65).

8. Transmission automatique selon la revendication 6 ou 7, **caractérisée en ce qu'**un capteur de position d'engrenage (70) pour détecter la position de l'engrenage de la transmission de type embrayage à crabots (80), dans laquelle l'unité de commande exécute la commande d'assistance au changement de vitesse au cours de laquelle, au moment du changement de vitesse, la position d'embrayage de l'embrayage à friction (54) passe à un côté d'accouplement à la seconde vitesse (B) inférieure à la première vitesse (A) appliquée jusqu'à ce que la position d'embrayage atteigne la position d'embrayage de référence, et dans laquelle la position d'embrayage de référence est située sur un côté de désaccouplement à partir d'une première position d'embrayage où un état de demi-embrayage se termine, et est située sur le côté d'accouplement à partir d'une seconde position d'embrayage où l'embrayage à friction (54) se trouve dans l'état de désaccouplement le plus important possible pour sa structure, au cours d'une période à partir du moment où l'état de mise en prise entre les bossages de mise en prise (57c) et les éléments concaves de mise en prise (57e) des premiers et seconds engrenages (57a, 57b) est détectée par le capteur de position d'engrenage (70).

9. Transmission automatique selon l'une des revendications 5 à 7, **caractérisée en ce qu'**elle comprend un capteur de révolution de l'arbre principal (56) pour détecter une révolution d'un arbre principal (55) couplé au côté suiveur de l'embrayage à friction (54), dans laquelle l'unité de commande exécute la commande d'assistance au changement de vitesse au cours de laquelle, au moment du changement de vitesse, la position d'embrayage de l'embrayage à friction (54) passe à un côté d'accouplement à la seconde vitesse (B) inférieure à la première vitesse (A) appliquée jusqu'à ce que la position d'embrayage atteigne la position d'embrayage de référence, et dans laquelle la position d'embrayage de référence qui est située sur un côté de désacccouplement à partir d'une première position d'embrayage où un état de demi-embrayage se termine, et est située sur le côté d'accouplement à partir d'une seconde position d'embrayage où l'embrayage à friction (54) se trouve dans l'état de désaccouplement le plus important possible pour sa structure, au cours d'une période à partir du moment où l'état d'embrayage atteint la position d'embrayage de référence jusqu'au moment où la révolution de l'arbre principal (55) détectée par le capteur de révolution de l'arbre principal (56) atteint une valeur prédéterminée.

10. Transmission automatique selon l'une des revendications 5 à 7, **caractérisée en ce qu'**elle comprend un capteur de révolution de l'arbre principal (56) pour détecter une révolution d'un arbre principal (55) couplé au côté suiveur de l'embrayage à friction (54) et un capteur de révolution de l'arbre de transmission (69) pour détecter la révolution d'un arbre de transmission (58) couplé à l'arbre principal (55) par le biais de la transmission de type embrayage à crabots (80), dans laquelle l'unité de commande exécute la commande la commande assistée de changement de vitesse au cours de laquelle, au moment du changement de vitesse, la position d'embrayage de l'embrayage à friction (54) passe à un côté d'accouplement à la seconde vitesse (B) inférieure à la première vitesse (A) appliquée jusqu'à ce que la position d'embrayage atteigne la position d'embrayage de référence, et dans laquelle la position d'embrayage de référence qui est située sur un côté de désaccouplement à partir d'une première position d'embrayage où un état de demi-embrayage se termine, et est située sur le côté d'accouplement à partir d'une seconde position d'embrayage où l'embrayage à friction (54) se trouve dans l'état de désaccouplement le plus important possible pour sa structure, au cours d'une période où la position d'embrayage atteint la position d'embrayage de référence jusqu'au moment où la différence entre la révolution de l'arbre principal (55) détectée par le capteur d'arbre principal (56) et la révolution de l'arbre de transmission (58) détectée par le capteur de révolution de l'arbre de transmission (69) atteint une valeur prédéterminée.

11. Transmission automatique selon l'une des revendications 5 à 10, dans laquelle l'unité de commande passe de la position d'embrayage de l'embrayage à friction (54) à une vitesse constante au moment de la commande d'assistance au changement de vitesse.

12. Contrôleur de transmission automatique selon l'une des revendications 5 à 10, dans laquelle l'unité de commande passe la position d'embrayage de l'embrayage à friction (54) par paliers au moment de la commande d'assistance au changement de vitesse.

13. Véhicule, en particulier véhicule à selle, doté d'une transmission automatique selon l'une quelconque des revendications 5 à 12.
